# EUROPÄISCHE PATENTSCHRIFT

(11) **EP 0 590 624 B1**
(45) Veröffentlichungstag und Bekanntmachung des Hinweises auf die Patenterteilung: **17.07.1996**
(21) Anmeldenummer: 93115677.2
(22) Anmeldetag: 29.09.1993
(51) Int. Cl.: B27B 27/06, B27B 27/10, B23Q 1/25

(54) **Winkeleinstellvorrichtung für eine vertikale Plattensäge**
Positioning device for a vertical panel saw
Dispositif de positionnement d'une scie verticale à panneaux

(30) Priorität: 30.09.1992 CH 3049/92
(43) Veröffentlichungstag der Anmeldung: 06.04.1994
(73) Patentinhaber: Optical and Electronic Engineering Dr. Ing. ETH Paul D. Iten, CH-6047 Kastanienbaum (CH)
(72) Erfinder: Iten, Paul D., Dr. Ing. ETH, CH-6047 Kastanienbaum (CH)
(74) Vertreter: Blum, Rudolf Emil Ernst

(56) Entgegenhaltungen:
- EP-A- 0 564 412
- DE-A- 2 365 373
- DE-A- 3 917 146
- DE-U- 9 017 126
- US-A- 2 871 768
- US-A- 4 249 446
- US-A- 4 911 048

## Beschreibung

Die Erfindung betrifft eine Winkeleinstellvorrichtung für eine Plattensäge zur schiefwinkligen Anordnung des Sägegutes.

Bekannt sind insbesonders vertikal stehende Plattensägen zur Bearbeitung von grossen Holzfaserplatten aller Arten und Platten aus Holz, Kunststoff oder Metall. Bei solche Maschinen liegt das Sägegut auf einer horizontalen Auflagefläche an der Maschinenbasis. Mit einer an einer horizontal verschiebbaren Säule vertikal verschiebbaren Säge können sodann horizontale und vertikale Schnitte ausgeführt werden.

Vielfach ist es allerdings notwendig, auch Schrägschnitte auszuführen. Dazu muss das Sägegut schräg gelagert werden, so dass der an sich horizontale oder vertikale Sägeweg die gewünschte schiefwinklige Richtung im Sägegut nimmt. Zu diesem Zweck werden im wesentlichen keilförmige Vorrichtungen verwendet, welche zwischen die Auflagefläche der Säge und das Sägegut eingeschoben werden und auf denen dieses sodann in schräger Lage ruht.

Bekannte Vorrichtungen dieser Art bestehen in der Regel aus zwei Balken, welche an einem Ende über ein Scharnier verbunden und gegeneinander schwenkbar sind. Die so entstehende V-förmige Anordnung wird mit einem ihrer Schenkel auf die Auflagefläche der Plattensägemaschine gelegt. Mit dem zweiten Schenkel bildet sich somit eine schräge Fläche zur Aufnahme des Sägeguts. Zur Fixierung des Schwenkwinkels muss wegen der grossen auftretenden Drehmomente normalerweise eine Querstrebe zwischen den beiden Balken befestigt werden.

Derartige Vorrichtungen haben verschiedene Nachteile. Da sie nur auf eine Seite aufgeschwenkt werden können, stören sie z.B. oftmals den Arbeitsablauf. Insbesondere wird es unter Umständen erforderlich, die Beschickungsrichtung und die Schnittabfolge der Geometrie der Vorrichtung anzupassen.

Ausserdem ist die Verstrebung, die zur Fixierung des Winkels notwendig ist, sehr aufwendig. Insbesondere bereitet es Probleme, eine Verstrebung zu konstruieren, die allen gewünschten Winkeln anpassbar sowie möglichst einfach und schnell zu bedienen ist. Auch sollte die Verstrebung nach Möglichkeit nicht über die Balken hinausragen. Insbesondere bei kleinen Oeffnungswinkeln der Balken sind diese Bedingungen kaum gleichzeitig erfüllbar. Deshalb sind die bestehenden Lösungen sehr aufwendig, schwer zu bedienen und teuer.

Auch sollte der Oeffnungswinkel zwischen den beiden Balken möglichst gut messbar sein. Bei den vorliegenden Lösungen ist dies kostengünstig nur über relativ ungenaue oder andernfalls über entsprechend teuere Winkelgeber am Scharnier oder über eine indirekte, nichtlineare Messung der Strebenposition und -länge möglich.

Deshalb stellt sich die Aufgabe, eine Vorrichtung zur Winkeleinstellung von Sägegut in einer Plattensäge zu schaffen, die diese Nachteile nicht aufweist.

Diese Aufgabe wird mit der Winkeleinstellvorrichtung gemäss dem ersten Patentanspruch erfüllt.

Dank der Möglichkeit, die erfindungsgemässe Vorrichtung auf beiden Seiten auszuschwenken, vereinfachen sich viele Arbeitsabläufe beim Schneiden der Platten.

Ausserdem reduziert der im wesentlichen symmetrische Aufbau die angreifenden Drehkräfte und bietet auch mehr Platz für eine Gelenkanordnung. Damit kann die Vorrichtung bei besserer Präzision stabiler, einfacher und bedienungsfreundlicher ausgeführt werden.

Auch ergibt sich mehr Platz zur Anordnung einer Arretierungsstrebe. Damit wird deren Aufbau und deren Anpassung an den Einstellwinkel einfacher.

Ein weiterer Vorteil der erfindungsgemässen Vorrichtung besteht darin, dass sie in allen bestehenden, insbesondere vertikalen Plattensägen ohne wesentliche Modifikation einsetzbar ist.

Weitere Vorteile ergeben sich aus der folgenden Beschreibung eines Ausführungsbeispiels der Vorrichtung anhand der Figuren. Dabei zeigen:
Figur 1 eine Ansicht der Vorrichtung in horizontaler Stellung;
Figuren 2-5 einige schematische Betriebsstellungen der Vorrichtung;
Figur 6 ein Einspannelement für das Sägegut mit exzentrischem Andruckorgan sowie das Schienenprofil;
Figur 7 eine Detailansicht der Arretierung des Oeffnungswinkels der Vorrichtung;
Figur 8 eine Vorder- und Seitenansicht einer Ausführung des Gelenkbereichs; und
Figur 9 eine alternative Arretierung des Einstellwinkels.

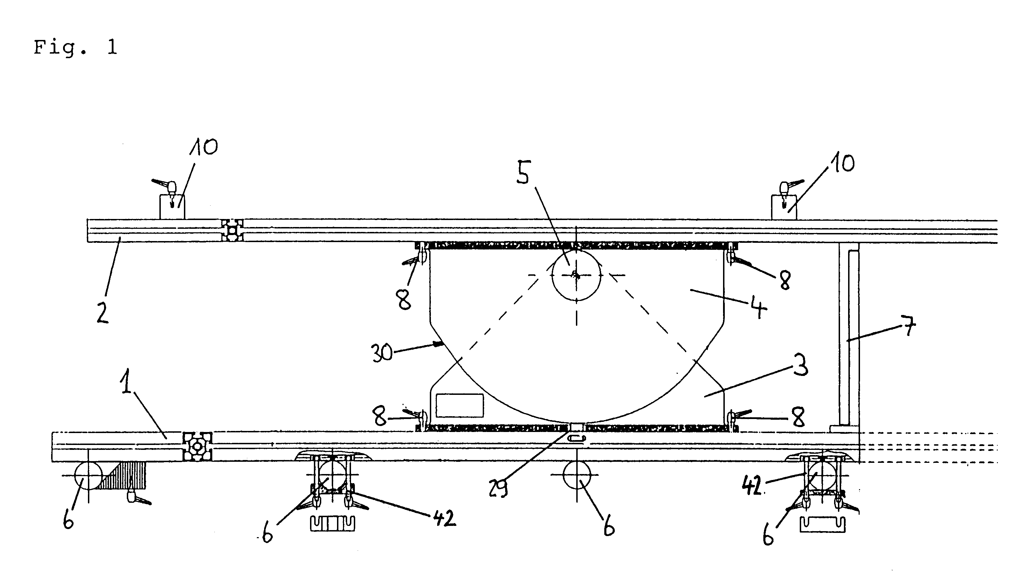

Figur 1 zeigt eine erste Ansicht der erfindungsgemässen Vorrichtung in einer Horizontalstellung. Leicht ersichtlich sind dabei die beiden Auflagen, welche vorzugsweise von Aluminiumprofilschienen 1 und 2 gebildet sind, die über zwei Gelenkteile 3 (Konsole) und 4 (Wippe) in einer Drehachse 5 wippenartig verbunden sind.

Die erste, untere Schiene 1 bildet dabei eine erste, untere Auflage und ruht auf der Sägemaschine, von der nur die Auflagerollen 6 für das Sägegut schematisch dargestellt sind. Die zweite, dazu verschwenkbare obere Schiene 2 ist zur ersten Schiene um das Gelenk 5 verkippbar. Die Oberkante dieser zweiten Schiene definiert dabei eine obere, zweite Auflage, auf welcher beim Betrieb der Vorrichtung das Sägegut aufliegt.

Zur Fixierung des relativen Winkels zwischen den beiden Schienen ist z.B. eine verstell- und verschiebbare strebenartige Arretierung 7 vorgesehen.

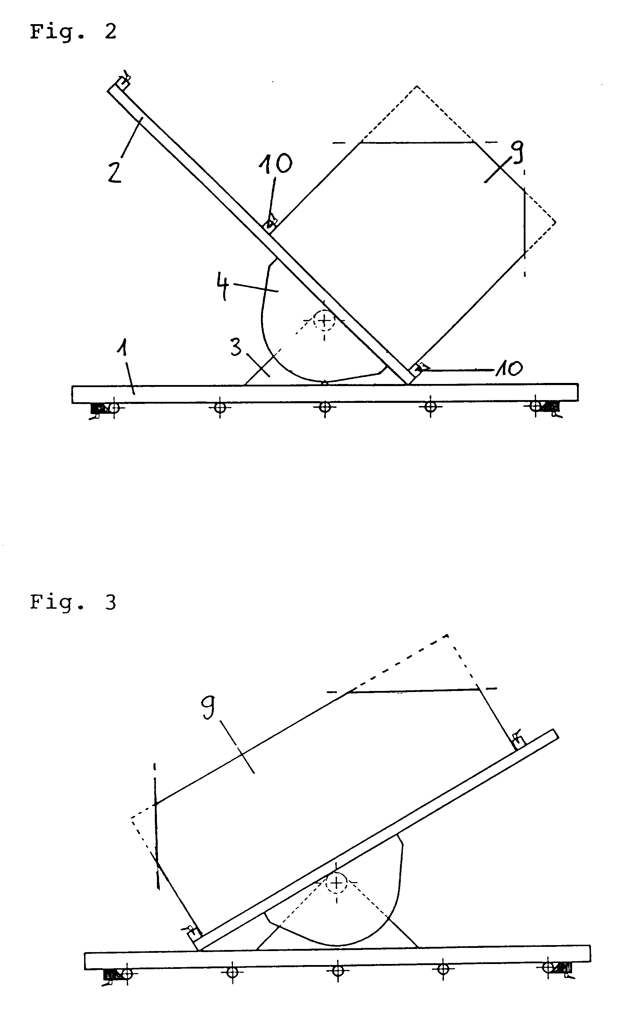

Die Figuren 2-5 zeigen einige schematische Betriebsstellungen der Vorrichtung mit aufgesetztem Sägegut 9. Dabei ist ersichtlich, dass die Gelenkteile 3 und 4 gegenüber beiden Schienen 1 und 2 verschiebbar sind. Damit ist es möglich, sehr lange Schienen zu verwenden, ohne dass sich diese bei grossen Wippwinkeln überschneiden. Somit sind problemlos Winkel bis über +/-45° einstellbar.

Wie in Figur 1 schematisch dargestellt ist, sind zur einfachen Verschiebung der Schienen diese mit Schnellverschlüssen 8 oder Schrauben an den jeweiligen Gelenkteilen 3 und 4 befestigt. Damit diese Verschiebung stufenlos geschehen kann, sind die Schienen vorzugsweise aus je einem Aluminiumprofil mit durchgehender Längsnut gefertigt, in welche die Verschlüsse 8 eingreifen.

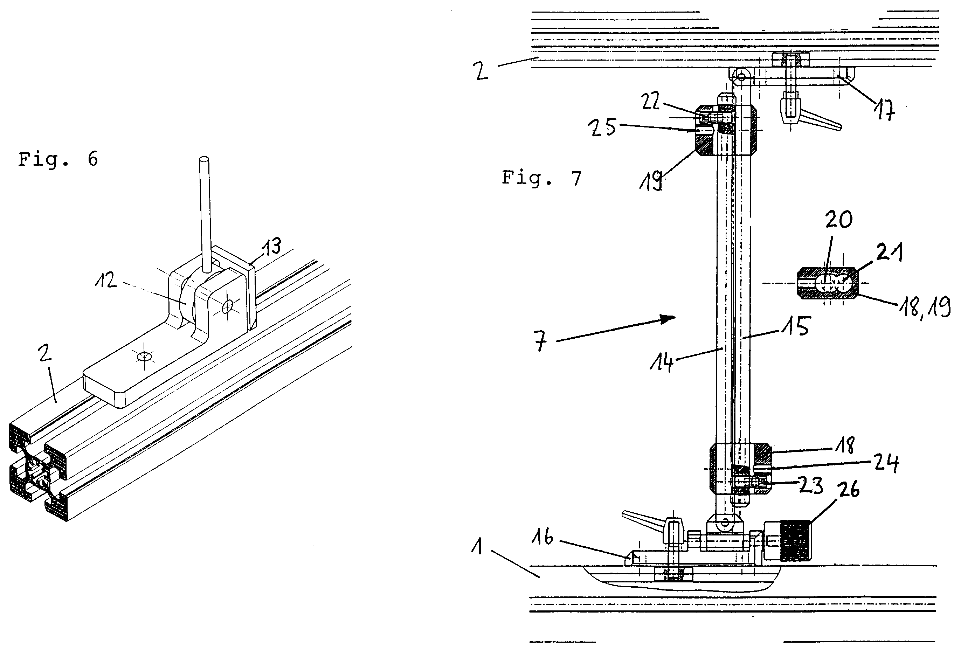

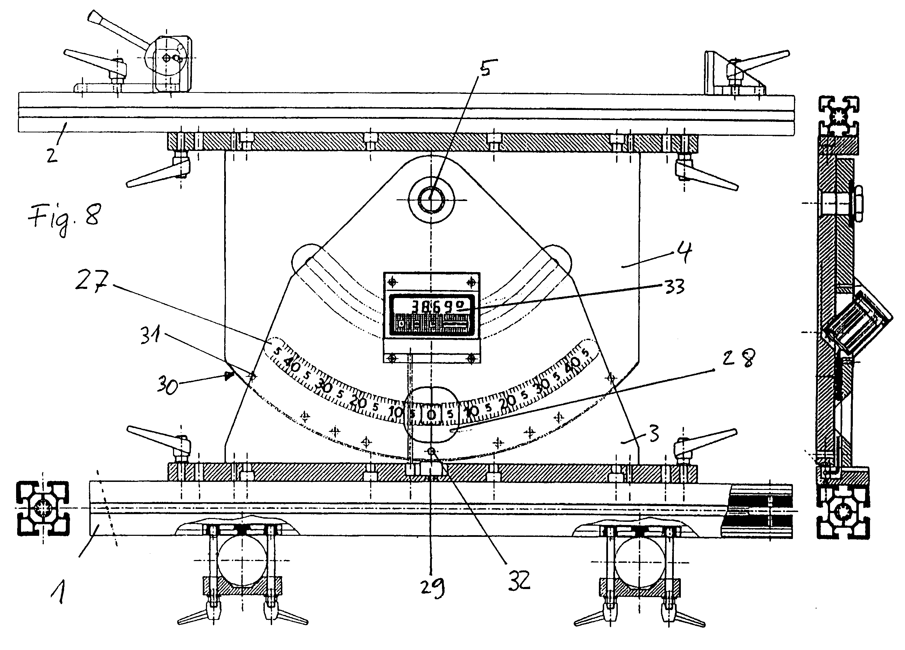

Zur Fixierung des Sägeguts auf der oberen Schiene 2 sind Einspannelemente 10 vorgesehen. Dabei handelt es sich zum Beispiel um Metallblöcke, die mit Schrauben oder Schnellverschlüssen in der Schiene 2 befestigt sind. Ist eine zusätzliche Befestigung des Sägeguts nötig, so kann z.B. auch ein Einspannelement verwendet werden, wie es in Figur 6 gezeigt wird. Auch dieses Element ist mit einem geeigneten Verschluss (siehe z.B. Figur 8) in der Schiene arretiert. Mittels eines Exzenters 12 kann aber zusätzlich mit der Betätigung des Hebels eine Platte 13 gegen das Sägegut gedrückt und dieses somit arretiert werden.

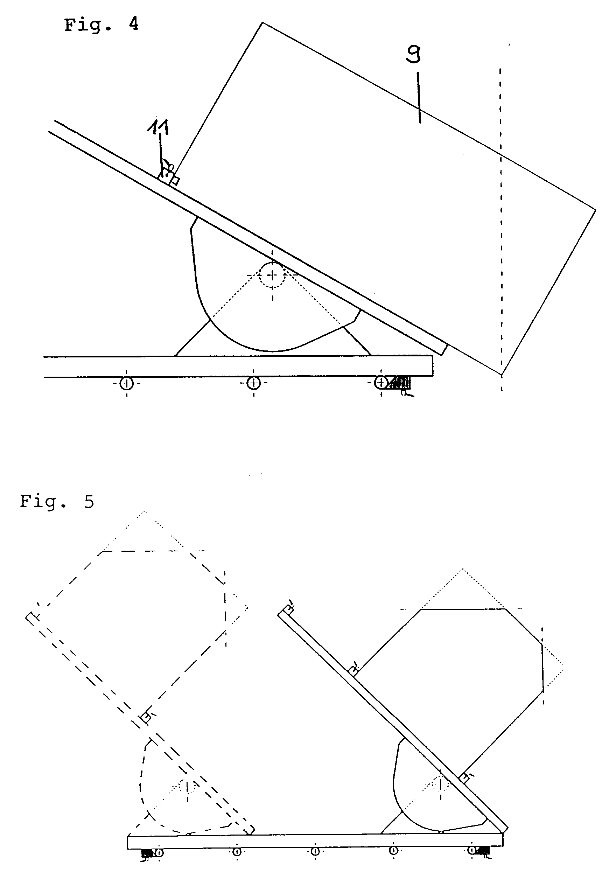

Für eine Arbeitsstellung, wie sie in der Figur 4 gezeigt wird, kann ein Einspannelement 11 verwendet werden, welches z.B. mittels zwei klemmenartigen Backen das Sägegut seitlich umfasst und festhält. Somit wird es möglich, das Sägegut 9 so anzuordnen, dass es das untere Ende der oberen Schiene 2 überragt. Damit ist es möglich, einen Schnitt im Bereich der entsprechenden unteren Ecke des Sägeguts auszuführen, wie er schematisch mit einer strichpunktierten Linie angedeutet ist.

Die Arretierung des Oeffnungswinkels der Vorrichtung kann im Bereich der Gelenkteile 3 und 4 geschehen, wie weiter unten beschrieben wird. Doch kann man auch eine strebenartige Arretierung 7 zwischen den Schienen einzusetzen, wie sie in Figur 1 schematisch und in Figur 7 im Detail gezeigt ist.

Im vorliegenden Ausführungsbeispiel wird diese Arretierung aus zwei Zahnstangen 14 und 15 gebildet, wobei die erste Zahnstange 14 an der unteren Schiene 1 und die zweite Zahnstange 15 an der oberen Schiene 2 befestigt ist. Auch hier werden zur Befestigung mit den Schienen Verschluss-Anordnungen 16, 17 verwendet, welche gelenkig mit der jeweiligen Zahnstange 14 resp. 15 verbunden sind.

Zur gegenseitigen Fixierung der Zahnstangen 14, 15 werden eine oder zwei Manschetten 18, 19 mit zwei Oeffnungen 20, 21 verwendet, durch welche die Zahnstangen geführt werden. Dabei ist eine (20) der Oeffnungen länglich ausgearbeitet und erlaubt eine Bewegung der entsprechenden Zahnstange quer zur Stangenrichtung. Mittels Federorganen 22, 23, von denen je eines in jeder Zahnstange montiert ist, werden die beiden Zahnstangen voneinander weggedrückt, so dass sich ihre Zähne voneinander lösen. Damit sind die Stangen frei gegeneinander verschiebbar. Zur Arretierung der Stangen sind in den Manschetten 18, 19 an den Positionen 24 und 25 Spannschrauben (nicht gezeigt) einsetzbar. Durch das Einsetzen dieser Spannschrauben werden die beiden Stangen gegeneinander gedrückt und ineinander verzahnt.

Damit ergeben sich verschiedene Möglichkeiten, die strebenartige Arretierung 7 dem jeweiligen Einstellwinkel der Vorrichtung anzupassen. Für eine Grobeinstellung können die beiden Zahnstangen voneinander gelöst und verschoben werden, womit die Gesamtlänge der Arretierung 7 geregelt werden kann. Auch ist der Winkel der Arretierung gegenüber den Schienen 1 und 2 verstellbar, indem man mindestens eine der Verschluss-Anordnungen 16, 17 löst und entlang der Schienen verschiebt.

Zur Feineinstellung des Winkels ist ausserdem ein Feintrieb 26 vorgesehen, mit dem der untere Teil der Stange 14 verschoben werden kann. Damit kann der Einstellwinkel im Bereich von +/-1° mit einer Auflösung von 0.01° reguliert werden.

Eine Messung des Einstellwinkels geschieht vorteilhafterweise im Bereich der beiden Gelenkteile 3 und 4. Figur 8 zeigt eine mögliche Ausführung der Gelenkteile 3 und 4, an welchen die wichtigsten Elemente der Winkelmessung ersichtlich sind.

Zur Messung des Winkels kann im einfachsten Fall in einem der Gelenkteile 4 eine Skala 27 vorgesehen sein, welche am anderen Gelenkteil 3, z.B. in einer Oeffnung 28, abgelesen wird. Allerdings ist die Genauigkeit dieser Winkelmessung nicht sonderlich hoch und die Ablesung mühsam.

In einer genaueren Variante wird die Winkelmessung auf eine Längenmessung zurückgeführt. Dabei wird mittels einer Messvorrichtung 29 am unteren Gelenkteil 3 die Bewegung der Aussenkante 30 des oberen Gelenkteils 4 überwacht. Dazu folgt die Aussenkante 30 mindestens in einem Bereich des Gelenkteils 4 einem Kreisbogen mit Zentrum in der Drehachse 5.

Die Längenmessung an diesem Kreisbogen kann dabei auf verschiedene Art geschehen, wie z.B. optisch oder elektromechanisch. Im vorliegenden Ausführungsbeispiel geschieht die Messung auf kontaktlos magnetischem Wege. Derartige Messvorrichtungen sind dem Fachmann aus der Längenmessung bekannt und haben den Vorteil, dass sie unempfindlich gegenüber Verschmutzung und mechanischen Einflüssen sind. Zur Messung ist dabei an der Aussenkante 30 ein Magnetband angebracht, welches z.B. periodisch alternierend polarisierte Domänen aufweist. Der Messensor 29 detektiert diese Information und gibt sie einer Auswerteschaltung weiter, welche den entsprechenden Einstellwinkel berechnet und anzeigt.

Die entsprechende Auswerteschaltung und die Anzeige 33 können z.B. im unteren Gelenkteil 3 integriert sein. Die Versorgungsleitung wird dabei z.B. über eine Umlenkrolle geführt, welche in der unteren Schiene gleitend montiert ist. An der Umlenkrolle ist ein Gummizug angebracht, welcher dafür sorgt, dass die Versorgungsleitung immer straff bleibt.

Die Genauigkeit der Winkelmessung ist im wesentlichen durch den Radius der Aussenkante 30 und die Längenauflösung der Messeinrichtung gegeben. Im vorliegenden Ausführungsbeispiel kann eine Winkelauflösung besser als 0.01° erreicht werden.

Figur 8 zeigt weiter, dass in der Gelenkplatte 4 auch noch Einstellbohrungen 31 vorgesehen sein können. Diese können mit einem durch ein entsprechendes Loch in der unteren Gelenkplatte 3 ragenden Stift zur Fixierung der oberen Gelenkplatte 4 unter diskreten Winkeln verwendet werden. Damit können vorbestimmte Winkel rasch einstellbar sein. Auch eine Eichstellung für die Winkelmesseinrichtung kann auf diese Weise einstellbar sein.

Selbstverständlich ist das oben beschriebene Ausführungsbeispiel nicht die einzige Möglichkeit, die erfindungsgemässe Vorrichtung zu realisieren.

Je nach Bauform der vertikalen Plattensäge können z.B. verschiedene Ausführungen von Klammern oder Pressen verwendet werden, um die untere Schiene 1 an der Säge zu befestigen. Im vorliegenden Beispiel werden dazu z.B. Klammern 42 verwendet, die die Auflagerollen 6 der Säge umschliessen (siehe Figur 1).

Weiter ist es z.B. nicht unbedingt nötig, dass die beiden Schienen 1 und 2 verschiebbar zur Drehachse sind. So ist es denkbar, die untere Schiene 1 fest mit dem unteren Gelenkteil 3 zu verbinden. Damit der volle Einstellwinkelbereich erhalten bleibt, kann die Schiene 1 auch kürzer gewählt oder sogar weggelassen werden, sodass sie nicht an der oberen Schiene 2 ansteht. In diesem Falle ist es aber besonders wichtig, dass die Vorrichtung gut mit der Standsäge verbunden ist.

Es ist auch möglich, die obere Schiene 2 fest mit dem oberen Gelenkteil 4 zu verbinden. In diesem Falle werden grosse Einstellwinkel ermöglicht, indem wiederum eine der Schienen entsprechend kurz gestaltet wird, oder indem die Gelenkteile 3 und 4 bei grossen Winkeln zum entsprechenden Ende der unteren Schiene 1 verschoben werden.

Im Bereich der Gelenkteile 3, 4 sind selbstverständlich auch verschiedene Ausführungen denkbar. So kann z.B. die Drehachse auch höher oder tiefer angeordnet werden. Es ist allerdings von Vorteil, die Geometrie so zu wählen, dass in horizontaler Winkeleinstellung ein minimaler Abstand zwischen den Schienen 1 und 2 gewährleistet bleibt, so dass die strebenartige Arretierung 7 gut Platz findet.

Wie bereits erwähnt, kann die strebenartige Arretierung 7 an den beiden Schienen 1 und 2 befestigt sein. Alternativ ist es aber auch möglich, die Strebe mit mindestens einem der Gelenkteile 3 und 4 zu verbinden. So ist es insbesondere sinnvoll, das untere Ende der Strebe 7 an den Gelenkteil 3 z.B. über ein Gelenk zu koppeln. Damit ist es möglich, die Gelenkteile 3, 4 und die obere Schiene 2 gegenüber der unteren Schiene zu verschieben, ohne dass der Einstellwinkel verändert wird.

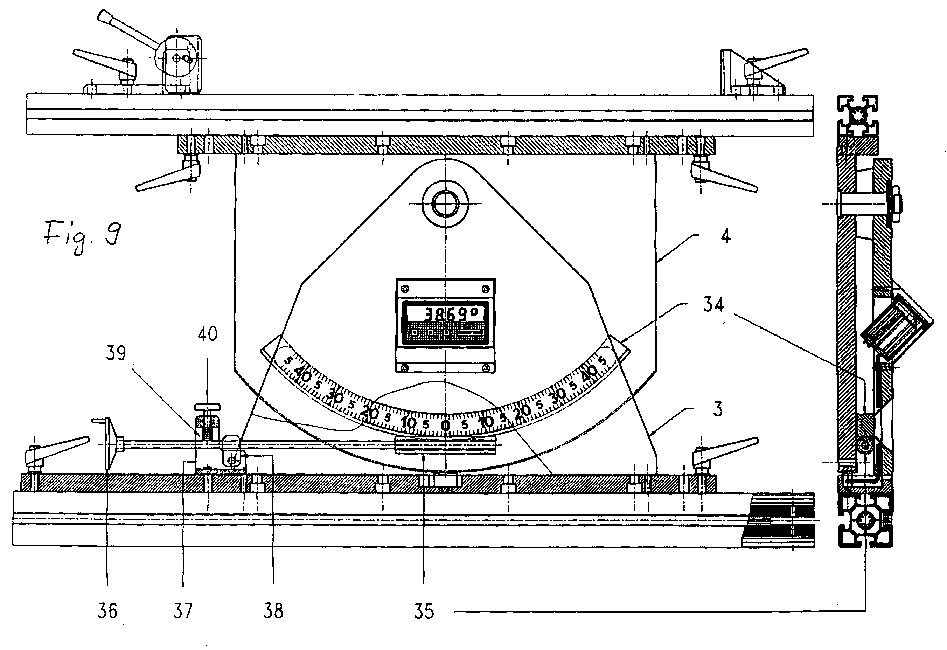

Alternativ zur Arretierung mittels der Strebe 7 ist auch eine Arretierung im Gelenkbereich denkbar, wie sie in Figur 9 gezeigt wird. Hier ist zwischen den Gelenkteilen 3 und 4 ein Zwischenraum ausgespart, in welchem ein Schneckengetriebe angeordnet ist. Dieses besteht aus einem Zahnkranz 34, welcher am oberen Gelenkteil 4 ausgeformt ist; und einer Schnecke 35. Die Schnecke kann mittels eines Drehgriffs 36 gedreht werden und ist in einem Block 37 auf dem unteren Gelenkteil gelagert. Zur Schnellverstellung des Einstellwinkels ist ihr Lager 38 so ausgestaltet, dass sie vom Zahnkranz 34 weggedrückt werden kann, womit der obere Gelenkteil 4 frei drehbar wird. Dazu sind im Lager 38 eine Andruckfeder 39 sowie eine Sicherungsschraube 40 vorgesehen.

Eine derartige Arretierung erlaubt eine lineare Kontrolle des Einstellwinkels mit hoher Präzision.

Es ist auch möglich, die Schnecke über einen geeigneten Motor anzutreiben, wodurch die Winkeleinstellung automatisiert werden kann.

Dank ihrer robusten, einfachen Ausführung und grossen Präzision bietet die erfindunsgemässe Vorrichtung in allen Fällen ein professionelles Werkzeug in der Arbeit mit vertikalen Plattensägen.

## Patentansprüche

1. Winkeleinstellvorrichtung für eine Plattensäge zur schiefwinkligen Anordnung des Sägegutes, dadurch gekennzeichnet, dass die Vorrichtung eine erste Auflage (1) zur Positionierung der Winkeleinstellvorrichtung an der Plattensäge und eine zweite, gegenüber der ersten Auflage beidseitig wippenartig um einen Drehpunkt (5) verschwenkbare Auflage (2,4) für das Sägegut und mindestens eine Arretierung (7;34,35) für die zweite Auflage aufweist.

2. Winkeleinstellvorrichtung nach Anspruch 1, dadurch gekennzeichnet, dass der Drehpunkt (5) gegenüber der ersten Auflage (1,3) seitlich verschiebbar ist.

3. Winkeleinstellvorrichtung nach einem der vorangehenden Ansprüche, dadurch gekennzeichnet, dass die zweite Auflage (2,4) eine Auflagekante für das Sägegut definiert, entlang derer die zweite Auflage (2,4) gegenüber dem Drehpunkt (5) verschiebbar ist.

4. Winkeleinstellvorrichtung nach einem der vorangehenden Ansprüche, dadurch gekennzeichnet, dass der Schwenkwinkel der zweiten Auflage (2,4) gegenüber der ersten Auflage (1,3) beidseitig mindestens 45° beträgt.

5. Winkeleinstellvorrichtung nach einem der vorangehenden Ansprüche, dadurch gekennzeichnet, dass die mindestens eine Arretierung aus einer in ihrer Länge verstellbaren Strebe (7) zwischen der ersten (1,3) und der zweiten Auflage (2,4) besteht.

6. Winkeleinstellvorrichtung nach Anspruch 5, dadurch gekennzeichnet, dass die Strebe (7) an der ersten (1,3) und/oder der zweiten (2,4) Auflage verschiebbar befestigt ist.

7. Winkeleinstellvorrichtung nach einem der Ansprüche 5 oder 6, dadurch gekennzeichnet, dass die Strebe (7) zwei mit ihren Zähnen zueinander weisende Zahnstangen (14,15) und mindestens eine diese umschliessende Manschette (18,19) aufweist, wobei die Zahnstangen zur Längenverstellung der Strebe mittels einem oder mehreren Federorganen (22,23) derart voneinander beabstandet sind, dass ihre Zähne nicht ineinandergreifen und wobei die Zahnstangen mittels einem oder mehreren Andruckelementen (24,25) zur Arretierung der Strebe miteinander in Verzahnung bringbar sind.

8. Winkeleinstellvorrichtung nach einem der vorangehenden Ansprüche, dadurch gekennzeichnet, dass zur Messung und Anzeige des Schwenkwinkels zwischen der ersten (1,3) und der zweiten (2,4) Auflage eine Messvorrichtung vorgesehen ist, die an einer der Auflagen konzentrisch zur Drehachse (5) einen Kreisbogenabschnitt (30) umfasst, an dem jeweils beim Verschwenken der Sägegutauflage mittels eines Messabtasters eine Strecke abtastbar ist, aus deren Länge der Winkelwert gebildet und angezeigt wird.

9. Winkeleinstellvorrichtung nach Anspruch 8, dadurch gekennzeichnet, dass auf dem Kreisbogenabschnitt (30) ein Magnetband angeordnet ist, welches mit dem Messabtaster (29) auslesbar ist.

10. Winkeleinstellvorrichtung nach einem der vorangehenden Ansprüche, dadurch gekennzeichnet, dass die erste Auflage (1,3) eine erste Schiene (1) und verschiebbar darauf befestigt ein erstes Scharnierteil (3) aufweist, wobei die Drehachse (5) durch das erste Scharnierteil (3) geht.

11. Winkeleinstellvorrichtung nach einem der vorangehenden Ansprüche, dadurch gekennzeichnet, dass die zweite Auflage (2,4) eine zweite Schiene (2) und verschiebbar daran befestigt ein zweites Scharnierteil (4) aufweist, wobei die Drehachse (5) durch das zweite Scharnierteil (4) geht.

12. Winkeleinstellvorrichtung nach einem der vorangehenden Ansprüche, dadurch gekennzeichnet, dass eine Arretierung vorgesehen ist, welche aus einem Getriebe (34,35) besteht, welches die Auflagen (1,3; 2,5) miteinander koppelt.

13. Winkeleinstellvorrichtung nach den Ansprüchen 10, 11 und 12, dadurch gekennzeichnet, dass das Getriebe aus einem ersten Getriebeteil (35) besteht, welcher am ersten Scharnierteil (3) angeordnet ist, und aus einem zweiten Getriebeteil (34), welcher am zweiten Scharnierteil (4) angeordnet ist.

14. Winkeleinstellung nach einem der Ansprüche 12 oder 13, dadurch gekennzeichnet, dass das Getriebe ein auskuppelbares Schneckengetriebe mit einem Zahnkranz (34) und einer darin eingreifenden Schnecke (35) ist, wobei zur Auskuppelung die Schnecke (35) vom Zahnkranz (34) wegbewegbar ist.

15. Plattensäge mit einer Winkeleinstellvorrichtung nach einem der vorangehenden Ansprüche.

## Claims

1. Angle positioning device for a panel saw for tilted arrangement of the panels to be sawed, characterised in that the device comprises a first support (1) for positioning the angle positioning device on the panel saw and a second support (2,4) for the panels to be sawed, which second support can be pivoted rocker-like in both directions about a point of rotation (5), and at least one arrest (7;34,35) for the second support.

2. Angle positioning device of claim 1 characterised in that the point of rotation (5) can be laterally displaced in respect to the first support (1,3).

3. Angle positioning device of one of the preceding claims characterised in that the second support (2,4) defines a supporting edge for the panels to be sawed, along which the second support (2,4) can be displaced in respect to the point of rotation (5).

4. Angle positioning device of one of the preceding claims characterised in that the pivot angle of the second support (2,4) in respect to the first support (1,3) is at least 45° in both directions.

5. Angle positioning device of one of the preceding claims characterised in that the at least one arrest consists of a strut (7) adjustable in length between the first (1,3) and the second (2,4) support.

6. Angle positioning device of claim 5 characterised in that the strut (7) is displaceably mounted to the first (1,3) and/or the second (2,4) support.

7. Angle positioning device of one of the claims 5 or 6 characterised in that the strut (7) comprises two toothed racks (14,15) the teeth of which are facing each other and at least one sleeve (18,19) enclosing them, wherein the toothed racks are, for length adjustment, kept at a distance from each other by means of one or more spring members (22,23) in such a way that their teeth are not engaged, and wherein the toothed racks can be engaged for arresting by means of one or more pressure members (24,25).

8. Angle positioning device of one of the preceding claims characterised in that a measuring device is provided for measuring and displaying the pivotal angle between the first (1,3) and the second (2,4) support, which comprises a circular arc section (3) on one of the supports concentric to the axis of rotation (5), whereon during pivoting of the panel support a distance can be measured by means of a measuring scanner, from the length of which the angle value is formed and displayed.

9. Angle positioning device of claim 8 characterised in that a magnetic tape is arranged on the circular arc section (30), which can be read by the measuring scanner (29).

10. Angle positioning device of one of the preceding claims characterised in that the first support (1,3) comprises a first track (1) and displaceably attached thereon a first hinge member (3), wherein the axis of rotation (5) intersects the first hinge member (3).

11. Angle positioning device of one of the preceding claims characterised in that the second support (2,4) comprises a second track (2) and displaceably attached thereon a second hinge member (4), wherein the axis of rotation (5) intersects the second hinge member (4).

12. Angle positioning device of one of the preceding claims characterised in that an arrest is provided consisting of a gearing (34,35), which couples the supports (1,3; 2,5).

13. Angle positioning device of the claims 10, 11 and 12 characterised in that the gearing consists of a first gearing member (35), which is arranged on the first hinge member (3), and a second gearing member (34), which is arranged on the second hinge member (4).

14. Angle positioning device of one of the claims 12 or 13 characterised in that the gearing comprises a worm gearing, which can be decoupled, with a toothed wheel (34) and a spiral rack (35) engaging it, wherein for decoupling the spiral rack (35) can be moved away from the toothed wheel (34).

15. Panel saw with an angle positioning device of one of the preceding claims.

## Revendications

1. Dispositif de positionnement angulaire pour une scie à panneau afin de disposer obliquement le matériau à scier, caractérisé en ce que ce dispositif comporte un premier support (1) pour le positionner sur la scie à panneau, et un second support (2, 4) destiné à recevoir le matériau à scier et pouvant être basculé des deux côtés autour d'un centre de rotation (5), ainsi qu'au moins un dispositif d'immobilisation (7; 34, 35) pour le second support.

2. Dispositif de positionnement angulaire selon la revendication 1, caractérisé en ce que le centre de rotation (5) est déplaçable latéralement par rapport au premier support (1, 3).

3. Dispositif de positionnement angulaire selon une des revendications précédentes, caractérisé en ce que le second support (2, 4) forme une arête de retenue pour le matériau à scier, le long de laquelle le second support (2, 4) peut être décalé par rapport au centre de rotation (5).

4. Dispositif de positionnement angulaire selon une des revendications précédentes, caractérisé en ce que l'angle de basculement du second support (2, 4) par rapport au premier support (1, 3) est d'au moins 45° de chaque côté.

5. Dispositif de positionnement angulaire selon une des revendications précédentes, caractérisé en ce que chaque dispositif d'immobilisation est constitué par un longeron (7) de longueur réglable situé entre le premier (1, 3) et le second (2, 4) support.

6. Dispositif de positionnement angulaire selon la revendication 5, caractérisé en ce que le longeron (7) est fixé de manière déplaçable au premier (1, 3) et/ou au second (2, 4) support.

7. Dispositif de positionnement angulaire selon une des revendications 5 ou 6, caractérisé en ce que le longeron (7) comporte deux crémaillères (14, 15) dont les dentures se font face, et au moins une manchette (18, 19) entourant les crémaillères, celles-ci étant séparées pour le réglage de la longueur du longeron au moyen d'un ou de plusieurs organes à ressort (22, 23) de façon à ce que leurs dentures ne s'engrènent pas, les crémaillères pouvant être amenées à s'engrener au moyen d'un ou de plusieurs éléments de pression (24, 25) afin de bloquer le longeron.

8. Dispositif de positionnement angulaire selon une des revendications précédentes, caractérisé en ce qu'il comporte un dispositif de mesure de l'angle de basculement entre le premier (1, 3) et le second (2,4) support, ce dispositif de mesure comprenant un arc de cercle (30) concentrique à l'axe de basculement (5) et le long duquel la longueur d'une trajectoire est mesurable par un palpeur lors du basculement du support pour le matériau à scier afin de déterminer la valeur de l'angle.

9. Dispositif de positionnement angulaire selon la revendication 8, caractérisé en ce qu'une bande magnétique pouvant être lue par le palpeur (29) est disposée sur l'arc de cercle (30).

10. Dispositif de positionnement angulaire selon une des revendications précédentes, caractérisé en ce que le premier support (1, 3) comporte un premier rail (1) sur lequel est fixé de manière déplaçable un premier organe de charnière (3) à travers lequel passe l'axe de basculement (5).

11. Dispositif de positionnement angulaire selon une des revendications précédentes, caractérisé en ce que le second support (2, 4) comporte un second rail (2) sur lequel est fixé de manière déplaçable un second organe de charnière (4) à travers lequel passe l'axe de basculement (5).

12. Dispositif de positionnement angulaire selon une des revendications précédentes, caractérisé en ce qu'il comprend un dispositif d'immobilisation consistant en un mécanisme d'entraînement (34, 35) qui accouple les supports (1, 3; 2,4) l'un à l'autre.

13. Dispositif de positionnement angulaire selon les revendications 10, 11 et 12, caractérisé en ce que le mécanisme d'entraînement consiste en une première partie de mécanisme (35) agencée sur le premier organe de charnière (3) et en une seconde partie de mécanisme (34) agencée sur le second organe de charnière (4).

14. Dispositif de positionnement angulaire selon une des revendications 12 ou 13, caractérisé en ce que le mécanisme est un entraînement à vis sans fin pouvant être désaccouplé qui comporte un secteur denté (34) ainsi qu'une vis sans fin (35) engagée dans celui-ci et pouvant en être séparée pour désaccoupler le mécanisme.

15. Scie à panneau avec un dispositif de positionnement angulaire selon l'une des revendications précédentes.
